# EUROPEAN PATENT SPECIFICATION

(11) **EP 2 944 087 B1**
(45) Date of publication and mention of the grant of the patent: **14.11.2018**
(21) Application number: 13871218.7
(22) Date of filing: 13.12.2013
(51) Int. Cl.: H04N 19/597, H04N 19/105, H04N 19/176, H04N 19/147

(54) **METHOD OF DISPARITY VECTOR DERIVATION IN THREE-DIMENSIONAL VIDEO CODING**
VERFAHREN ZUR DISPARITÄTSVEKTORABLEITUNG IN EINER DREIDIMENSIONALEN VIDEOCODIERUNG
PROCÉDÉ DE DÉRIVATION D'UN VECTEUR D'ÉCART DANS LE CODAGE VIDÉO TRIDIMENSIONNEL

(30) Priority: 09.01.2013 WO PCT/CN2013/070278
(43) Date of publication of application: 18.11.2015
(73) Proprietor: HFI Innovation Inc., Hsinchu County 302 (TW)
(72) Inventor: ZHANG, Na, Shangqiu Henan 476005 (CN); CHEN, Yi-Wen, Taichung City Taiwan 420 (TW); LIN, Jian-Liang, Yilan County Taiwan 270 (TW); AN, Jicheng, Beijing 100037 (CN); ZHANG, Kai, Beijing 100013 (CN)
(74) Representative: Hoefer & Partner Patentanwälte mbB
(86) International application number: PCT/CN2013/089382
(87) International publication number: WO 2014/108014

(56) References cited:
- WO-A1-2012/171442
- WO-A1-2012/171442
- CN-A- 101 415 115
- TECH G ET AL: "3D-HEVC Test Model 2", 2. JCT-3V MEETING; 102. MPEG MEETING; 13-10-2012 - 19-10-2012; SHANGHAI; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-B1005, 23 December 2012 (2012-12-23), XP030130414,
- ZHANG K ET AL: "3D-CE5.h related: Improvement on MV candidates for 3DVC", 2. JCT-3V MEETING; 102. MPEG MEETING; 13-10-2012 - 19-10-2012; SHANGHAI; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-B0089, 9 October 2012 (2012-10-09), XP030130270,
- Y-W CHEN ET AL: "3D-CE5.h related: Unified temporal collocated picture for DV derivation", 2. JCT-3V MEETING; 102. MPEG MEETING; 13-10-2012 - 19-10-2012; SHANGHAI; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-B0088, 9 October 2012 (2012-10-09), XP030130269,
- JAEWON SUNG ET AL: "3D-CE5.h: Simplification of disparity vector derivation for HEVC-based 3D video coding", 1. JCT-3V MEETING; 101. MPEG MEETING; 16-7-2012 - 20-7-2012; STOCKHOLM; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-A0126, 14 July 2012 (2012-07-14) , XP030130125,
- LI ZHANG ET AL: "3D-CE5.h related: Disparity vector derivation for multiview video and 3DV", 100. MPEG MEETING; 30-4-2012 - 4-5-2012; GENEVA; (MOTION PICTURE EXPERT GROUP OR ISO/IEC JTC1/SC29/WG11),, no. m24937, 1 May 2012 (2012-05-01), XP030053280,
- KANG J ET AL: "3D-CE5.h related: Improvements for disparity vector derivation", 2. JCT-3V MEETING; 102. MPEG MEETING; 13-10-2012 - 19-10-2012; SHANGHAI; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-B0047, 10 October 2012 (2012-10-10), XP030130228,
- NA ZHANG ET AL.: 'Improved disparity vector derivation in 3D-HEVC' V ISUAL COMMUNICATION AND IMAGE PROCESSING (VCIP 17 November 2013, pages 1 - 5, XP032543663
- LG ELECTRONICS: '3D-CE5.h: Simplification of disparity vector derivation for HEVC-based 3D video coding.' JOINT COLLABORATIVE TEAM ON 3D VIDEO CODING EXTENSION DEVELOPMENT OF ITU-T SG 16 WP 3 AND TSO/IEC JTC 1/SC 29/WG 11, 1ST MEETING 16 July 2012, STOCKHOLM, SE, pages 1 - 4, XP030130125

## Description

### CROSS REFERENCE TO RELATED APPLICATIONS

The present invention claims priority to PCT Patent Application, Serial No. PCT/CN2013/070278, filed on January 9, 2013, entitled "Methods for Disparity Vector Derivation".

### TECHNICAL FIELD

The present invention relates to video coding. In particular, the present invention relates to disparity vector derivation for inter-view motion prediction, inter-view residual prediction, or predicting the DV of DCP (disparity-compensated prediction) blocks in three-dimensional video coding and multi-view video coding.

### BACKGROUND

Three-dimensional (3D) television has been a technology trend in recent years that is targeted to bring viewers sensational viewing experience. Multi-view video is a technique to capture and render 3D video. The multi-view video is typically created by capturing a scene using multiple cameras simultaneously, where the multiple cameras are properly located so that each camera captures the scene from one viewpoint. The multi-view video with a large number of video sequences associated with the views represents a massive amount data. Accordingly, the multi-view video will require a large storage space to store and/or a high bandwidth to transmit. Therefore, multi-view video coding techniques have been developed in the field to reduce the required storage space and the transmission bandwidth. A straightforward approach may simply apply conventional video coding techniques to each single-view video sequence independently and disregard any correlation among different views. Such straightforward techniques would result in poor coding performance. In order to improve multi-view video coding efficiency, multi-view video coding always exploits inter-view redundancy. The disparity between two views is caused by the locations and angles of the two respective cameras.

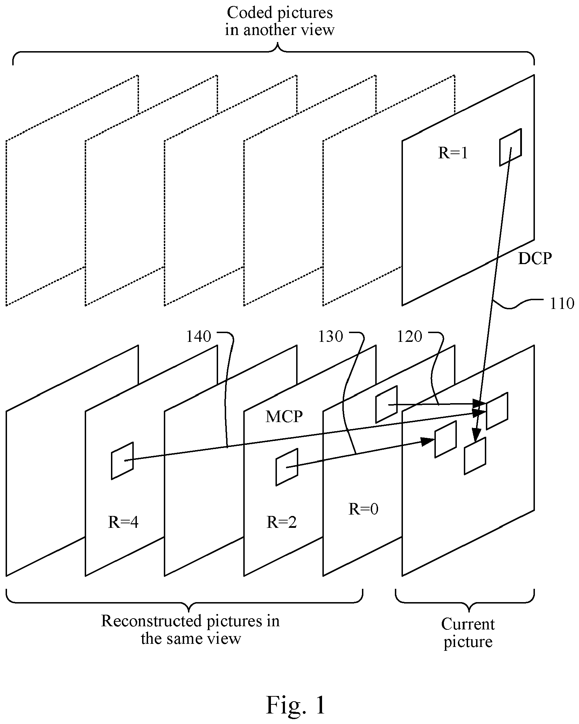

To share the previously coded texture information of adjacent views, a technique known as disparity-compensated prediction (DCP) has been included in the HTM (High Efficiency Video Coding (HEVC)-based Test Model) software test platform as an alternative to motion-compensated prediction (MCP). MCP refers to Inter-picture prediction that uses previously coded pictures of the same view, while DCP refers to an Inter-picture prediction that uses previously coded pictures of other views in the same access unit. Fig. 1 illustrates an example of 3D video coding system incorporating MCP and DCP. The vector (110) used for DCP is termed as disparity vector (DV), which is analog to the motion vector (MV) used in MCP. Fig. 1 illustrates three MVs (120, 130 and 140) associated with MCP. Moreover, the DV of a DCP block can also be predicted by the disparity vector predictor (DVP) candidate derived from neighboring blocks or the temporal collocated blocks that also use inter-view reference pictures.

In order to share the previously encoded motion information of reference views, HTM-5.0 uses a coding tool termed as *inter-view motion prediction.* According to the inter-view motion prediction, a DV for a current block is derived first and the prediction block in the already coded picture in the reference view is located by adding the DV to the location of current block. If the prediction block is coded using MCP, the associated motion parameters of the prediction block can be used as candidate motion parameters for the current block in the current view. The derived DV can also be directly used as a candidate DV for DCP.

Inter-view residual prediction is another coding tool used in HTM-5.0. In order to share the previously encoded residual information of reference views, the residual signal for current block can be predicted by the residual signal of the corresponding blocks in reference views. The corresponding block in reference view is located by a DV.

For Merge mode in HTM-5.0, the candidate derivation also includes an inter-view motion vector. A Merge candidate list is first constructed and motion information of the Merge candidate with the smallest rate-distortion (RD) cost is selected as the motion information of Merge mode. For the texture component, the order of deriving Merge candidates is: temporal inter-view motion vector merging candidate, left (spatial), above (spatial), above-right (spatial), disparity inter-view motion vector Merge candidate, left-bottom (spatial), above-left (spatial), temporal and additional bi-predictive candidates. For the depth component, the order of deriving Merge candidates is: motion parameter inheritance (MPI), left (spatial), above (spatial), above- right (spatial), bottom-left (spatial), above-left (spatial), temporal and additional bi-predictive candidates. A DV is derived for the temporal inter-view motion vector Merge candidate and the derived DV is directly used as the disparity inter-view motion vector Merge candidate.

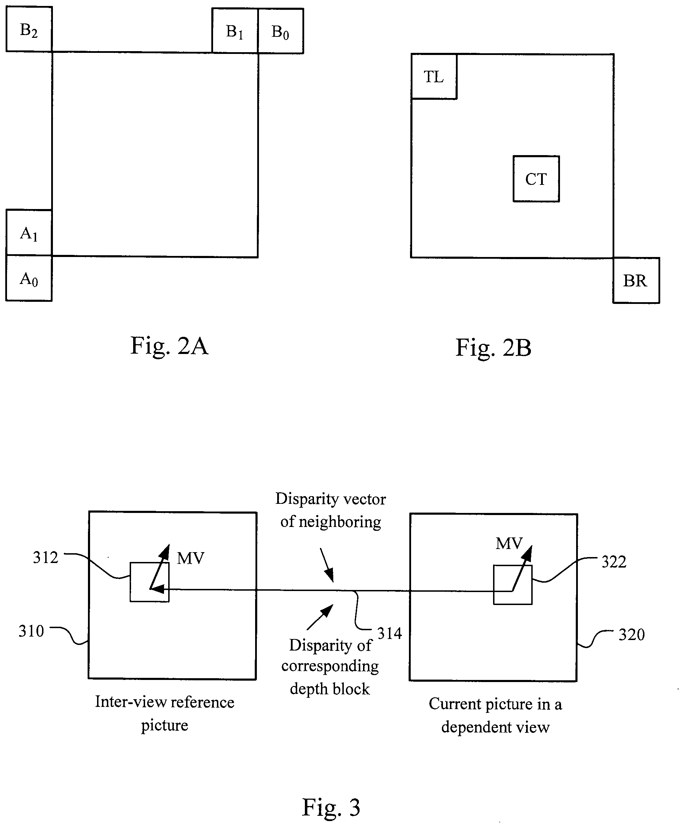

As mentioned above, various coding tools utilize a derived DV. Therefore, the DV is critical in 3D video coding for inter-view motion prediction, inter-view residual prediction, disparity-compensated prediction (DCP) or any other tools which need to indicate the correspondence between inter-view pictures. In HTM version 5.0, the disparity vector (DV) for a block can be derived so that the block can use the DV to specify the location of a corresponding block in an inter-view reference picture for the inter-view motion prediction and inter-view residual prediction. The DV is derived from spatial and temporal neighboring blocks according to a pre-defined order. The spatial neighboring blocks that DV derivation may use are shown in Fig 2A. As shown in Fig. 2A, five spatial neighboring blocks may be used. The search order for the spatial neighboring blocks is A₁ (left), B₁ (above), B₀ (above- right), A₀ (bottom-left) and B₂ (above-left).

As shown in Fig. 2B, two temporal blocks (CT and BR/TL) can be used to derive the DV based on a temporal corresponding block. The center block (CT) is located at the center of the current block. Block BR corresponds to a bottom-right block across from the bottom-right corner of the current block. If block BR is not available, the top-left block (TL) is used. Up to two temporal collocated pictures from a current view can be searched to locate an available DV. The first collocated picture is the same as the collocated picture used for Temporal Motion Vector Prediction (TMVP) in HEVC, which is signaled in the slice header. The second picture is different from that used by TMVP and is derived from the reference picture lists with the ascending order of reference picture indices. The DV derived from temporal corresponding blocks is added into the candidate list.

The second picture selection is described as follows:
(i) A random access point (RAP) is searched in the reference picture lists. If a RAP is found, the RAP is used as the second picture and the derivation process is completed. In case that the RAP is not available for the current picture, go to step (ii).
(ii) A picture with the lowest temporalID (TID) is selected as the second temporal pictures. If multiple pictures with the same lowest TID exist, go to step (iii).
(iii) Within the multiple pictures with the same lowest TID, a picture of smaller POC difference with the current picture is chosen.

If any DCP coded block is not found in the above mentioned spatial and temporal neighboring blocks, the disparity information obtained from DV-MCP (disparity vector based motion compensated prediction) blocks are used. Fig. 3 illustrates an example of disparity vector based motion compensated prediction (DV-MCP). A disparity vector (314) associated with current block 322 of current picture 320 in a dependent view is determined. The disparity vector (314) is used to find a corresponding reference block (312) of an inter-view reference picture (310) in the reference view (e.g., a base view). The MV of the reference block (312) in the reference view is used as the inter-view MVP candidate of the current block (322). The disparity vector (314) can be derived from the disparity vector of neighboring blocks or the depth value of a corresponding depth point. The disparity vector used in the DV-MCP block represents a motion correspondence between the current and inter-view reference picture.

To indicate whether a MCP block is DV-MCP coded or not and to conserve data associated with the disparity vector used for the inter-view motion parameters prediction, two variables are added to store the motion vector information of each block: dvMcpFlag and dvMcpDisparity. When dvMcpFlag is equal to 1, dvMcpDisparity is set to the disparity vector used for the inter-view motion parameter prediction. In advanced motion vector prediction (AMVP) and Merge candidate list construction process, dvMcpFlag of the candidate is set to 1 only for the candidate generated by inter-view motion parameter prediction. When a block is Skip coded, no MVD (motion vector difference) data and residual data are signaled. Therefore, in HTM-5.0, only the disparity vector from Skip coded DV-MCP blocks is used for DV derivation. Furthermore, only the spatial neighboring DV-MCP blocks are searched using the searching order: A0, A1, B0, B1 and B2. The first block that has dvMcpFlag equal to 1 will be selected and its dvMcpDisparity will be used as derived DV for the current block.

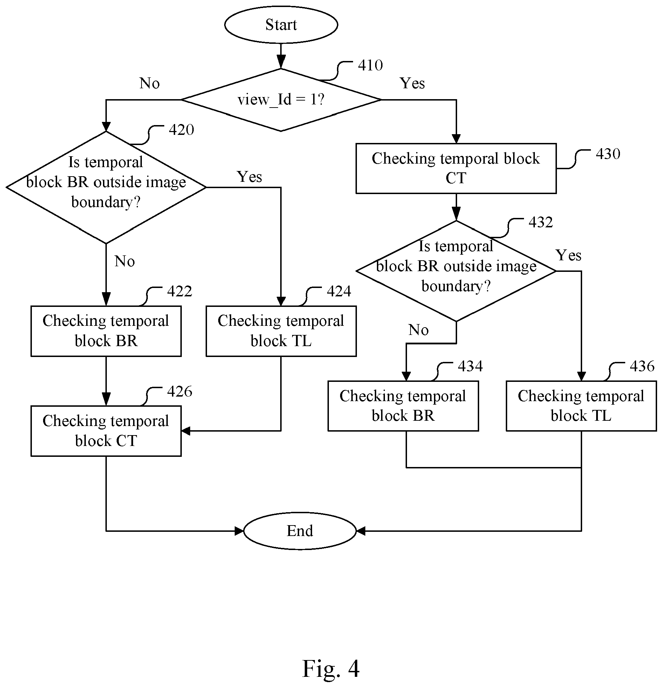

In HTM-5.0, the temporal DV derivation uses different checking order for different dependent views. An exemplary flowchart of the temporal DV candidate checking order for the temporal DV derivation is shown in Fig. 4. The view identification (i.e., view_Id) is checked first in step 410. If the view identification is larger than 1, the process goes to step 420 to check whether temporal block BR is outside the image boundary. If temporal block is inside the boundary, the process goes to step 422 to check whether temporal block BR has a DV. If a DV exists for temporal block BR, the DV is used as the temporal DV. Otherwise, the process goes to step 426. If temporal block BR is outside the boundary, the process goes to step 424 to check whether temporal block TL has a DV. If a DV exists for temporal block TL, the DV is used as the temporal DV. Otherwise, the process goes to step 426. In step 426, the process checks whether temporal block CT has a DV. If a DV exists for temporal block CT, the DV is used as the temporal DV. Otherwise, the temporal DV is not available. The temporal DV derivation is then terminated.

If the view corresponds to view 1 in Fig. 4, the process checks whether temporal block CT has a DV as shown in step 430. If a DV exists, the DV is used as the temporal DV. Otherwise, the process goes to step 432 to check whether temporal block BR is outside the image boundary. If temporal block is inside the boundary, the process goes to step 434 to check whether temporal block BR has a DV. If a DV exists for temporal block BR, the DV is used as the temporal DV. Otherwise, the temporal DV is not available and the process is terminated. If temporal block BR is outside the boundary, the process goes to step 436 to check whether temporal block TL has a DV. If a DV exists for temporal block TL, the DV is used as the temporal DV. Otherwise, the temporal DV is not available and the process is then terminated.

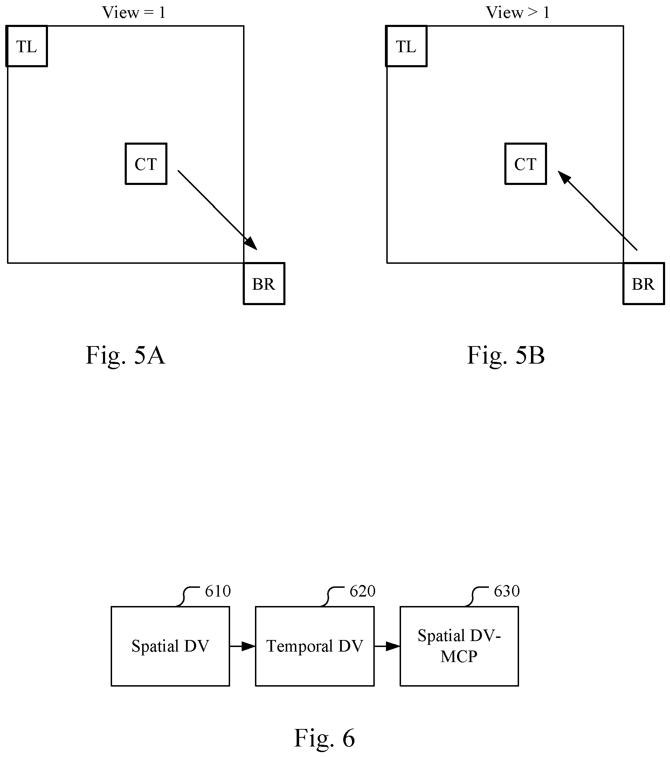

Fig. 5A and Fig. 5B illustrate a comparison between the temporal DV derivation for view 1 and views with view index larger than 1 respectively. For view 1, the center block (i.e., CT) is searched first and the bottom-right block (i.e., BR) is searched next. If block BR is outside the image boundary, the top-left block (i.e., TL) is used. For views with view index larger than 1, block BR is searched first and block CT is searched next. If block BR is outside image boundary, block TL is used. The use of different checking orders for different dependent views will increase system complexity.

The overall DV derivation process according to HTM-5.0 is illustrated in Fig. 6. The DV derivation process searches the spatial DV candidates first to select a spatial DV as shown in step 610. Five spatial DV candidates (i.e., (A₀, A₁, B₀, B₁ and B₂)) are used as shown in Fig. 2A. If none of the neighboring block has a valid DV, the search process moves to the next step (i.e., step 620) to search temporal DV candidates. The temporal DV candidates include block CT and block BR as shown in Fig. 2B. If block BR is outside the image boundary, block TL is used. If no DV can be derived from temporal DV candidates either, the process use a DV derived from depth data of a corresponding depth block as shown in step 630.

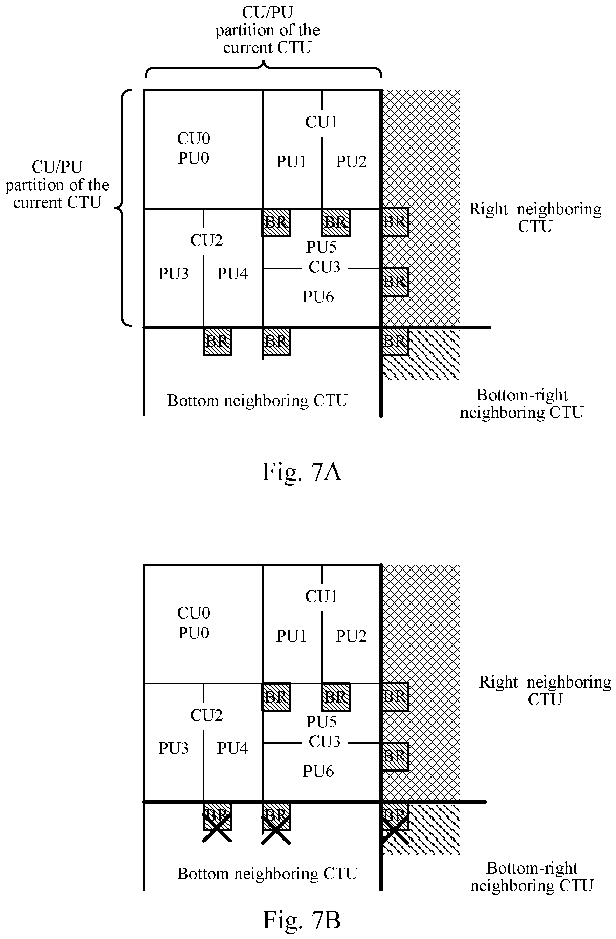

In HTM-5.0, when deriving the DV from the temporal neighboring blocks, it allows to access the BR temporal block residing in the lower coding tree unit (CTU) rows as shown in Fig. 7A. The BR blocks for corresponding CU/PU are indicated by shaded BR boxes. However, the temporal MVP derivation for Merge mode and AMVP mode forbids the use of BR blocks from a CTU row below the current CTU row as shown in Fig. 7B. For example, two BR blocks (indicated by crosses) of the bottom neighboring CTU and one BR block (indicated by a cross) of the bottom-right neighboring CTU are not used by coding units (CUs)/prediction units (PUs) in the current CTU.

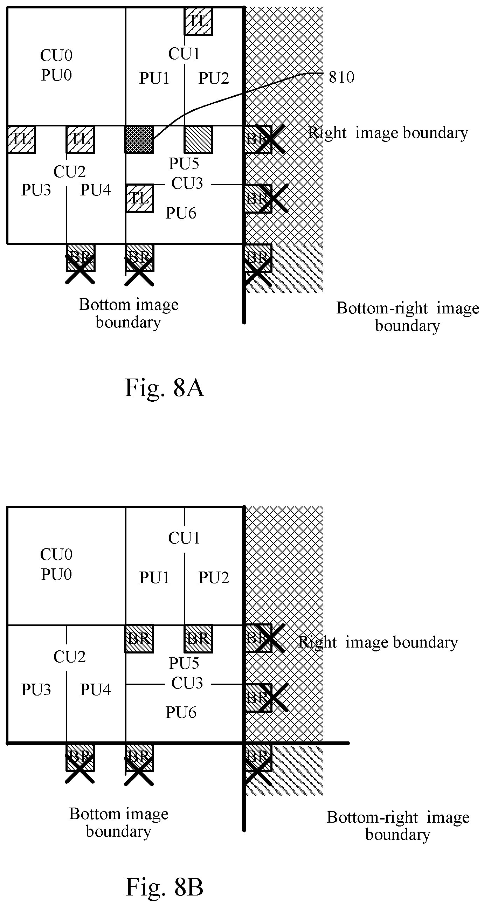

In HTM-5.0, when the BR blocks are outside the image boundary, neither the DV derivation process (Fig. 8A) nor the temporal MVP derivation process for Merge mode and AMVP mode (Fig. 8B) will use the BR blocks outside the image boundary. As mentioned before, the DV derivation process will use the temporal neighboring block TL when BR is outside the image boundary as shown in Fig. 8A. For example, there are five BR blocks outside the image boundary in Fig. 8A. Therefore, five corresponding TL blocks will be used to replace the five BR blocks. Block 810 happens to be an inside BR block for PU0 as well as a TL block for PU5.

The DV derivation process varies depending on the view identification. Also, the usage of TL block when BR blocks are outside the image boundary is different between the DV derivation process and the temporal MVP derivation process for Merge/AMVP modes. The derivation process in the existing HTM-5.0 is also complicated. It is desirable to simplify the process while maintaining the performance as much as possible.

Document TECH GET AL: "3D-HEVC Test Model 2",2. JCT-3V MEETING; 102. MPEG MEETING; 13-10-2012 - 19-10-2012; SHANGHAI; (THE JOINT COLLABORATIVE TEAM ON 3D VIDEO CODING EXTENSION DEVELOPMENT OF ISO/IEC JTC1/SC29/WG11 AND ITU-T SG.16); URL: HTTP://PHENIX.INT-EVRY.FR/JCT2/, no. JCT3V-B1005, 23 December 2012 (2012-12-23)
discloses that spatial neighboring blocks are firstly checked, followed by temporal neighboring blocks. This document further discloses that, for each candidate picture, the two temporal neighbor coding units, CUs, are checked and that the checking order is defined as Centre and BR for the first non-base view or BR and Centre for the second non-base view.

Document WO 2012/171442 A1 discloses that a MVP is selected from a candidate set including two spatial MVPs and one temporal MVP. Document WO 2012/171442 A1 further discloses that temporal predictors are derived from one of two blocks T_{BR} and T_{CTR}.

### SUMMARY

The above-mentioned objectives are achieved by a method according to independent claim 1. The dependent claims define preferred embodiments thereof.

A method and apparatus for three-dimensional video coding and multi-view video coding are disclosed. Embodiments according to the present invention determine a derived a disparity vector (DV) based on spatial and temporal neighboring blocks. The temporal neighboring blocks are searched according to a temporal search order and the temporal search order is the same for all dependent views. Furthermore, any temporal neighboring block from a coding tree block (CTU) below the current CTU row is omitted in the temporal search order. The derived DV can be used for indicating a prediction block in a reference view for inter-view motion prediction of the current block in AMVP (advance motion vector prediction) mode, Skip mode or Merge mode. The derived DV can also be used for indicating a corresponding block in a reference view for inter-view residual prediction of the current block. The derived DV can also be used for predicting a DV of a DCP (disparity-compensated prediction) block for the current block in the AMVP mode, the Skip mode or the Merge mode. The temporal neighboring blocks may correspond to a temporal CT block and a temporal BR block. In one embodiment, the temporal search order checks the temporal BR block first and the temporal CT block next. The spatial neighboring blocks may correspond to at least one of a left block, an above block, an above- right block, a bottom-left block and an above-left block of the current block.

In one embodiment, if the temporal BR block is located in a lower coding tree unit (CTU), the temporal BR block is omitted from the temporal search order. In another embodiment, the temporal TL block is not included in the temporal neighboring blocks. In another embodiment, the temporal neighboring blocks for determining the derived DV are also used for determining a motion vector prediction (MVP) candidate used for the AMVP mode or the Merge mode. In another embodiment, the temporal neighboring blocks, the temporal searching order, and any constraint on the temporal neighboring blocks used to determine the derived DV are also used to derive the motion vector prediction (MVP) candidate used for the AMVP mode or the Merge mode.

One aspect of the present invention addresses the spatial-temporal search order among the spatial neighboring blocks and the temporal neighboring blocks. For example, the DVs of the temporal neighboring blocks are checked first; the DVs of the spatial neighboring blocks are checked next; and the DVs used by the spatial neighboring blocks for inter-view motion prediction are checked the last.

### BRIEF DESCRIPTION OF DRAWINGS

Fig. 1 illustrates an example of three-dimensional coding and multi-view coding, where both motion-compensated prediction and disparity-compensated prediction are used.
Fig. 2A - Fig. 2B illustrate respective spatial neighboring blocks and temporal neighboring blocks used by HTM-5.0 to derive disparity vector.
Fig. 3 illustrates disparity vector from motion compensated prediction (DV-MCP) blocks.
Fig. 4 illustrates exemplary derivation process for determining a derived disparity vector for the current dependent view with view index equal to 1 and the current dependent view with view index greater than 1.
Fig. 5A - Fig. 5B illustrate different temporal search orders of temporal neighboring blocks between view with view index equal to 1 and views with view index greater than 1.
Fig. 6 illustrates the checking order for spatial neighboring blocks and temporal neighboring blocks to derive a disparity vector according to HTM-5.0.
Fig. 7A illustrates an example of temporal BR block locations associated with CUs/PUs of a CTU around CTU boundaries for deriving a disparity vector according to HTM-5.0
Fig. 7B illustrates an example of temporal BR block locations associated with CUs/PUs of a CTU around CTU boundaries for deriving a temporal motion vector prediction (TMVP) in AMVP mode, Merge mode or Skip mode according to HTM-5.0
Fig. 8A illustrates an example of temporal BR block locations associated with CUs/PUs of a CTU around image boundaries for deriving a disparity vector according to HTM-5.0
Fig. 8B illustrates an example of temporal BR block locations associated with CUs/PUs of a CTU around image boundaries for deriving temporal motion vector prediction (TMVP) in AMVP mode, Merge mode or Skip mode according to HTM-5.0
Fig. 9A illustrates an example of unified temporal BR block locations associated with CUs/PUs of a CTU around CTU boundaries for deriving a disparity vector and temporal motion vector prediction (TMVP) in AMVP mode, Merge mode or Skip mode according to HTM-5.0.
Fig. 9B illustrates an example of unified temporal BR block locations associated with CUs/PUs of a CTU around image boundaries for deriving a disparity vector and temporal motion vector prediction (TMVP) in AMVP mode, Merge mode or Skip mode according to HTM-5.0.
Fig. 10A - Fig. 10D illustrate various spatial-temporal search orders for deriving disparity vector for a dependent view with view index equal to 1 and greater than 1 according to embodiments of the present invention.
Fig. 11 illustrates an exemplary flowchart of a 3D or multi-view coding system using a unified temporal search order during DV derivation, where the same temporal search order is used for dependent view with view index equal to 1 and greater than 1.
Fig. 12 illustrates an exemplary flowchart of a 3D or multi-view coding system using a spatial-temporal search order during DV derivation, where the temporal neighboring blocks are searched before the spatial neighboring blocks.

### DETAILED DESCRIPTION

As described above, there are various issues with the disparity vector (DV) derivation and motion vector prediction (MVP) derivation in three-dimensional (3D) and multi-view video coding in High Efficiency Video Coding (HEVC) based 3D/multi-view video coding. Embodiments of the present invention simplify the DV derivation and temporal MVP derivation in 3D and multi-view video coding based on HTM version 5.0 (HTM-5.0).

In one embodiment, the selection of temporal collocated picture for DV derivation is simplified. The temporal collocated picture used for the DV derivation could be signaled in a bitstream at the sequence level (SPS), view level (VPS), picture level (PPS) or slice level (slice header). The temporal collocated picture used for the DV derivation according to an embodiment of the present invention is derived at both the encoder side and the decoder side using the following procedure:
(1) A random access point (RAP) is searched in the reference picture lists. If a RAP is found, the RAP is used as the temporal picture and the derivation process is completed. In case that the RAP is not available for the current picture, go to step (2).
(2) A picture with the lowest temporal ID (TID) is set as the temporal picture. If multiple pictures with the same lowest TID exist, go to step (3).
(3) Within multiple pictures with the same lowest TID, a picture having smaller POC difference with the current picture is chosen.

The temporal collocated picture used for DV derivation can also be derived at both the encoder side and the decoder side using the following procedure:
(1) A random access point (RAP) is searched in the reference picture lists. If a RAP is found, the RAP is used as the temporal picture for DV derivation. In case that the RAP is not available for the current picture, go to step (2).
(2) The collocated picture used for Temporal Motion Vector Prediction (TMVP) as defined in the high efficiency video coding (HEVC) is used as the temporal picture for DV derivation.

In another embodiment of the present invention, the search order for different dependent views is unified. The unified search order may correspond to a search order that searches the temporal BR block first and the temporal CT block next. The unified search order may also correspond to a search order that searches the temporal CT block first and the temporal BR block next. Other unified search order may also be used to practice the present invention.

The performance of 3D/multi-view video coding system incorporating a unified search order for all dependent views (BR first and CT next) according to an embodiment of the present invention is compared with the performance of a system using the search orders based on conventional HTM-5.0 as shown in Table 1. The performance comparison is based on different sets of test data listed in the first column. The BD-rate differences are shown for texture pictures in view 1 (video 1) and view 2 (video 2). A negative value in the BD-rate implies the present invention has a better performance. As shown in Table 1, the BD-rate for texture pictures in view 1 and view 2 coded using the unified search order is the same as that of conventional HTM-5.0. The second group of performance is the bitrate measure for texture video only (Video only), the total bitrate for synthesized texture video (Synth. only) and the total bitrate for coded and synthesized video (Coded & synth.). As shown in Table 1, the average performance in this group is also about the same as the conventional HTM-5.0. The processing times (encoding time, decoding time and rendering time) are also compared. As shown in Table 1, the encoding time, decoding time and rendering all show some improvement (0.4 to 1.1%). Accordingly, in the above example, the system with a unified search order achieves about the same performance as conventional HTM-5.0.

**Table. 1**

| | Video 1 | Video 2 | Video only | Synth. only | Coded & synth. | Enc time | Dec time | Ren time |
|---|---|---|---|---|---|---|---|---|
| Balloons | 0.0% | 0.0% | 0.0% | 0.0% | 0.0% | 99.1% | 99.8% | 98.7% |
| Kendo | -0.3% | 0.0% | -0.1% | 0.0% | 0.0% | 98.1% | 98.6% | 95.8% |
| Newspapercc | 0.0% | 0.0% | 0.0% | 0.0% | 0.0% | 98.9% | 99.6% | 99.4% |
| GhostTownFly | 0.5% | 0.0% | 0.1% | 0.1% | 0.1% | 99.6% | 101.4% | 99.5% |
| PoznanHall2 | 0.1% | 0.0% | 0.0% | 0.1% | 0.1% | 98.7% | 99.6% | 98.3% |
| PoznanStreet | -0.2% | 0.0% | 0.0% | 0.0% | 0.0% | 99.7% | 98.7% | 100.9% |
| UndoDancer | 0.1% | 0.0% | 0.0% | -0.1% | 0.0% | 98.3% | 99.3% | 99.5% |
| 1024x768 | -0.1% | 0.0% | 0.0% | 0.0% | 0.0% | 98.7% | 99.3% | 98.0% |
| 1920x1088 | 0.2% | 0.0% | 0.0% | 0.0% | 0.0% | 99.1% | 99.8% | 99.6% |
| **average** | **0.0%** | **0.0%** | **0.0%** | **0.0%** | **0.0%** | **98.9%** | **99.6%** | **98.9%** |

In another embodiment of the present invention, the temporal TL block is removed in the DV derivation process so that the derivation process is aligned with the temporal MVP derivation process in Merge/AMVP modes.

The performance of 3D/multi-view video coding system with the TL block removed according to an embodiment of the present invention is compared with the performance of a system based on HTM-5.0 allowing the TL block as shown in Table 2. The BD-rate differences are shown for texture pictures in view 1 (video 1) and view 2 (video 2). As shown in Table 2, the BD-rate for texture pictures in view 1 and view 2 coded with the TL block removed is the same as that of conventional HTM-5.0. The second group of performance is the bitrate measure for texture video only (Video only), the total bitrate for synthesized texture video (Synth. only) and the total bitrate for coded and synthesized video (Coded & synth.). As shown in Table 2, the average performance in this group is also about the same as the conventional HTM-5.0. The processing times (encoding time, decoding time and rendering time) are also compared. As shown in Table 2, the encoding time, decoding time and rendering show some improvement (1.2 to 1.6%). Accordingly, in the above example, the system with the TL block removed achieves about the same performance as conventional HTM-5.0.

**Table. 2**

| | Video 1 | Video 2 | Video only | Synth. only | Coded & synth. | Enc time | Dec time | Ren time |
|---|---|---|---|---|---|---|---|---|
| Balloons | 0.0% | 0.0% | 0.0% | 0.0% | 0.0% | 98.7% | 101.7% | 97.5% |
| Kendo | 0.0% | 0.0% | 0.0% | 0.0% | 0.0% | 98.3% | 97.5% | 96.5% |
| Newspapercc | 0.0% | 0.0% | 0.0% | 0.0% | 0.0% | 98.9% | 100.8% | 99.1% |
| GhostTownFly | 0.0% | -0.1% | 0.0% | 0.0% | 0.0% | 98.8% | 97.9% | 98.4% |
| PoznanHall2 | -0.1% | 0.2% | 0.0% | 0.0% | 0.0% | 98.9% | 95.1% | 97.2% |
| PoznanStreet | -0.1% | -0.1% | 0.0% | 0.0% | 0.0% | 99.8% | 97.2% | 100.5% |
| UndoDancer | 0.0% | 0.0% | 0.0% | 0.0% | 0.0% | 98.3% | 95.9% | 99.4% |
| 1024x768 | 0.0% | 0.0% | 0.0% | 0.0% | 0.0% | 98.6% | 100.0% | 97.7% |
| 1920x1088 | 0.0% | 0.0% | 0.0% | 0.0% | 0.0% | 99.0% | 96.5% | 98.9% |
| **average** | **0.0%** | **0.0%** | **0.0%** | **0.0%** | **0.0%** | **98.8%** | **98.0%** | **98.4%** |

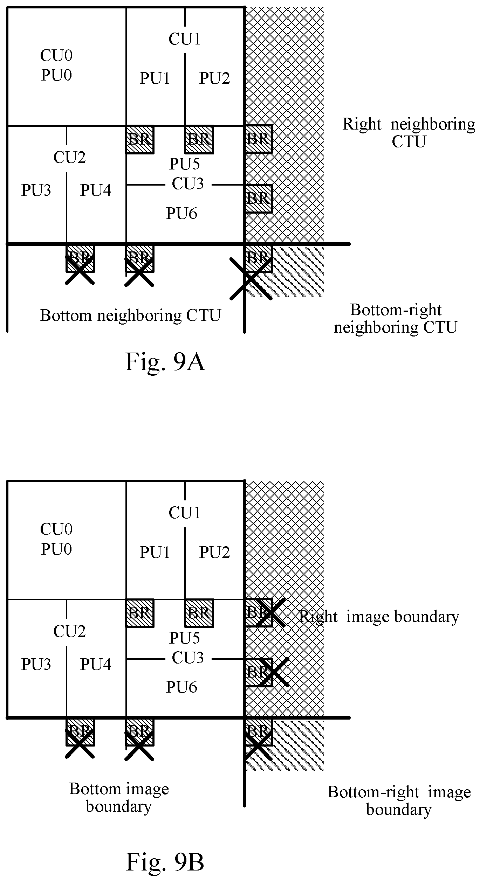

In another embodiment of the present invention, a unified temporal block usage for DV derivation and temporal MVP derivation in Merge/AMVP modes is disclosed. The unified temporal block usage may forbid BR usage if the BR block is located in a CTU (coding tree unit) row below the current CTU row as shown in Fig. 9A. In this case, the temporal BR block is considered as unavailable if the temporal BR block is in the CTU row below the current CTU row. The unified temporal block usage may also consider the BR block as unavailable if the BR block is outside the image boundary as shown in Fig. 9B. In this case, only the CT block is used.

The performance of 3D/multi-view video coding system incorporating a unified BR block usage according to an embodiment of the present invention is compared with the performance of a system based on the conventional HTM-5.0 as shown in Table 3. The BD-rate differences are shown for texture pictures in view 1 (video 1) and view 2 (video 2). As shown in Table 3, the BD-rate for texture pictures in view 1 coded using the unified BR block usage is the same as that of conventional HTM-5.0. The BD-rate for texture pictures in view 2 coded using the unified BR block usage incurs 0.3% loss compared to that of conventional HTM-5.0. The second group of performance is the bitrate measure for texture video only (Video only), the total bitrate for synthesized texture video (Synth. only) and the total bitrate for coded and synthesized video (Coded & synth.). As shown in Table 3, the average performance in this group is also about the same as the conventional HTM-5.0 except for the video only case, where it incurs 0.1% loss. The processing times (encoding time, decoding time and rendering time) are also compared. As shown in Table 3, the encoding time, decoding time and rendering show some improvement (0.6 to 1.4%). Accordingly, in the above example, the system with unified BR block usage achieves about the same performance as conventional HTM-5.0.

**Table. 3**

| | Video 1 | Video 2 | Video only | Synth. only | Coded & synth. | Enc time | Dec time | Ren time |
|---|---|---|---|---|---|---|---|---|
| Balloons | 0.1% | 0.5% | 0.1% | 0.1% | 0.1% | 98.8% | 97.9% | 97.8% |
| Kendo | 0.2% | 0.5% | 0.1% | 0.1% | 0.1% | 98.2% | 99.4% | 96.4% |
| Newspapercc | 0.0% | 0.0% | 0.0% | 0.0% | 0.0% | 98.5% | 99.0% | 99.1% |
| GhostTownFly | 0.1% | 0.1% | 0.0% | 0.0% | 0.0% | 98.8% | 100.3% | 99.2% |
| PoznanHa112 | 0.1% | 0.3% | 0.1% | 0.1% | 0.1% | 99.1% | 100.7% | 99.0% |
| PoznanStreet | -0.3% | 0.3% | 0.0% | 0.0% | 0.0% | 99.2% | 100.2% | 100.9% |
| UndoDancer | 0.0% | 0.0% | 0.0% | 0.1% | -0.1% | 97.9% | 98.6% | 100.6% |
| 1024x768 | 0.1% | 0.4% | 0.1% | 0.1% | 0.1% | 98.5% | 98.8% | 97.8% |
| 1920x1088 | 0.0% | 0.2% | 0.0% | 0.0% | 0.0% | 98.7% | 100.0% | 99.9% |
| **average** | **0.0%** | **0.3%** | **0.1%** | **0.0%** | **0.0%** | **98.6%** | **99.4%** | **99.0%** |

The performance for a system incorporating combined simplifications including a unified search order for all dependent views (BR first and CT next), TL block removal and unified BR block usage is compared against that of the HTM-5.0 as shown in Table 4. The BD-rate differences are shown for texture pictures in view 1 (video 1) and view 2 (video 2). As shown in Table 4, the BD-rate for texture pictures in view 1 coded using the unified BR block usage is the same as that of conventional HTM-5.0. The BD-rate for texture pictures in view 2 coded using the combined simplification incurs 0.2% loss compared to that of conventional HTM-5.0. The second group of performance is the bitrate measure for texture video only (Video only), the total bitrate for synthesized texture video (Synth. only) and the total bitrate for coded and synthesized video (Coded & synth.). As shown in Table 4, the average performance in this group is also about the same as the conventional HTM-5.0 except for the video only case, where it incurs 0.1% loss. The processing times (encoding time, decoding time and rendering time) are also compared. As shown in Table 4, the encoding time, decoding time and rendering show some improvement (0.5 to 1.7%). Accordingly, in the above example, the system with the combined simplifications achieves about the same performance as conventional HTM-5.0.

**Table. 4**

| | Video 1 | Video 2 | Video only | Synth. only | Coded & synth. | Enc time | Dec time | Ren time |
|---|---|---|---|---|---|---|---|---|
| Balloons | 0.1% | 0.5% | 0.1% | 0.1% | 0.1% | 98.8% | 97.9% | 97.8% |
| Kendo | 0.2% | 0.5% | 0.1% | 0.1% | 0.1% | 98.2% | 99.4% | 96.4% |
| Newspapercc | 0.0% | 0.0% | 0.0% | 0.0% | 0.0% | 98.5% | 99.0% | 99.1% |
| GhostTownFly | 0.1% | 0.1% | 0.0% | 0.0% | 0.0% | 98.8% | 100.3% | 99.2% |
| PoznanHa112 | 0.1% | 0.3% | 0.1% | 0.1% | 0.1% | 99.1% | 100.7% | 99.0% |
| PoznanStreet | -0.3% | 0.3% | 0.0% | 0.0% | 0.0% | 99.2% | 100.2% | 100.9% |
| UndoDancer | 0.0% | 0.0% | 0.0% | 0.1% | -0.1% | 97.9% | 98.6% | 100.6% |
| 1024x768 | 0.1% | 0.4% | 0.1% | 0.1% | 0.1% | 98.5% | 98.8% | 97.8% |
| 1920x1088 | 0.0% | 0.2% | 0.0% | 0.0% | 0.0% | 98.7% | 100.0% | 99.9% |
| **average** | **0.0%** | **0.3%** | **0.1%** | **0.0%** | **0.0%** | **98.6%** | **99.4%** | **99.0%** |

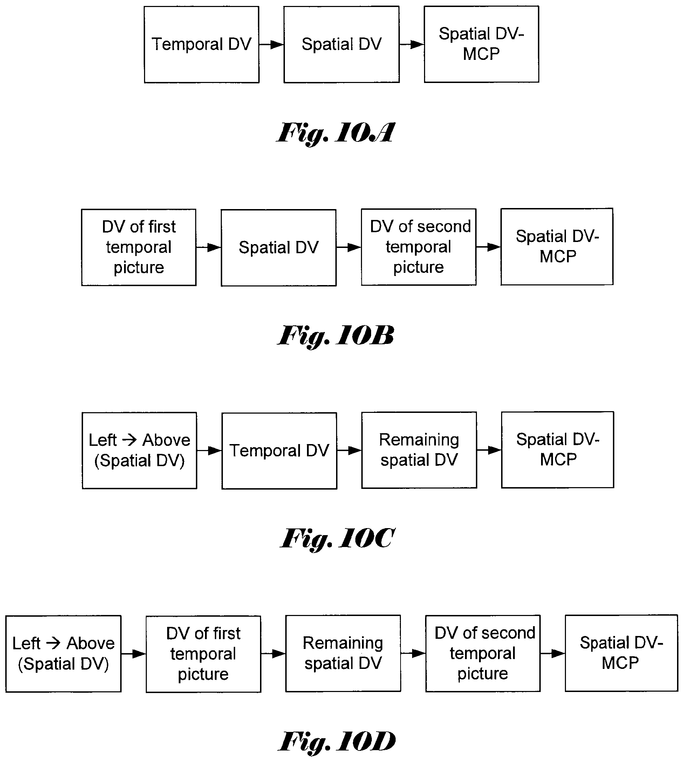

In yet another embodiment of the present invention, a new candidate checking order for DV derivation is disclosed. The candidate checking order for DV derivation may correspond to temporal DV, spatial DV (A₁, B₁, B₀, A₀, B₂) and spatial DV-MCP (A₀, A₁, B₀, B₁, B₂) as shown in Fig. 10A. The candidate checking order for DV derivation may correspond to the DV of the first temporal picture, spatial DV (A₁, B₁, B₀, A₀, B₂), the DV of the second temporal picture, spatial DV-MCP (A₀, A₁, B₀, B₁, B₂) as shown in Fig. 10B. The candidate checking order for DV derivation may correspond to spatial DV (A₁, B₁), temporal DV, spatial DV (B₀, A₀, B₂), spatial DV-MCP (A₀, A₁, B₀, B₁, B₂) as shown in Fig. 10C. The candidate checking order for DV derivation may correspond to spatial DV (A₁, B₁), DV of the first temporal picture, spatial DV (B₀, A₀, B₂), DV of the second temporal picture, spatial DV-MCP (A₁, B₁) as shown in Fig. 10D.

Another embodiment of the present invention places the disparity inter-view motion vector Merge candidate in a position of the Merge candidate list adaptively. In the first example, if the temporal neighboring block has a DV, the disparity inter-view motion vector Merge candidate is placed at the first position (i.e., the position with index 0) of the Merge candidate list. Otherwise, the candidate is placed at the fourth position of the Merge candidate list. In the second example, if the temporal neighboring block in the first temporal picture has a DV, the disparity inter-view motion vector Merge candidate is placed at the first position of the Merge candidate list. Otherwise, the candidate is placed at the fourth position of the Merge candidate list. In the third example, if the spatial neighboring block has a DV, the disparity inter-view motion vector Merge candidate is placed at the first position of the Merge candidate list. Otherwise, the candidate is placed at the fourth position of the Merge candidate list. In the fourth example, if the spatial neighboring block or the temporal neighboring block in the first temporal picture has a DV, the disparity inter-view motion vector Merge candidate is placed at the first position of the Merge candidate list. Otherwise, the candidate is placed at the fourth position of the Merge candidate list. In the fifth example, if the spatial neighboring block or the temporal neighboring block has a DV, the disparity inter-view motion vector Merge candidate is placed at the first position of the Merge candidate list. Otherwise, the candidate is placed at the fourth position of the Merge candidate list. Other methods for adaptively placing the disparity inter-view motion vector Merge candidate in a position of the Merge candidate list for texture coding can also be supported.

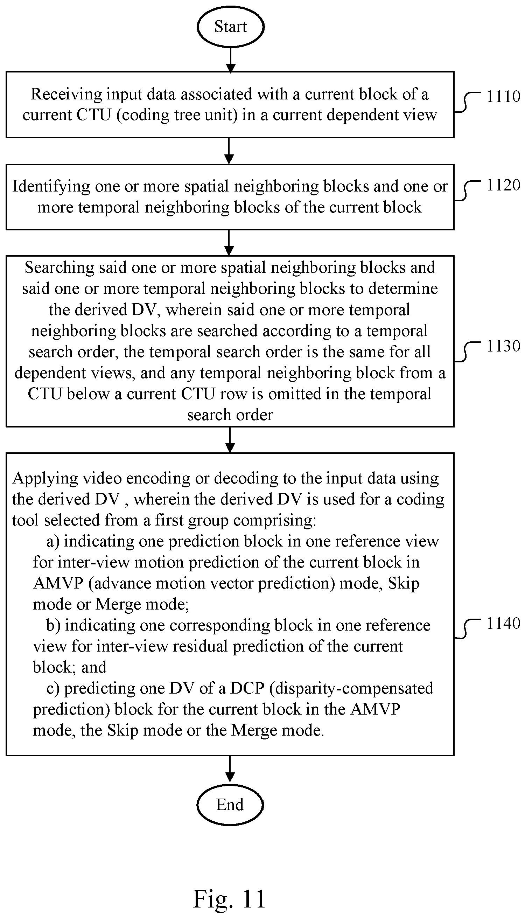

Fig. 11 illustrates an exemplary flowchart of a three-dimensional/multi-view coding system incorporating a unified temporal search order according to an embodiment of the present invention. The system receives input data associated with a current block of a current CTU (coding tree unit) in a current dependent view as shown in step 1110. For encoding, the input data associated with the current block corresponds to original pixel data, depth data, or other information associated with the current block (e.g., motion vector, disparity vector, motion vector difference, or disparity vector difference) to be coded. For decoding, the input data corresponds to the coded data associated with the current block in the dependent view. The input data may be retrieved from storage such as a computer memory, buffer (RAM or DRAM) or other media. The input data may also be received from a processor such as a controller, a central processing unit, a digital signal processor or electronic circuits that produce the input data. The spatial neighboring blocks and temporal neighboring blocks of the current block are identified as shown in step 1120. The spatial neighboring blocks and the temporal neighboring blocks are searched to determine the derived DV as shown in step 1130, wherein the temporal neighboring blocks are searched according to a temporal search order, the temporal search order is the same for all dependent view and any temporal neighboring block from a CTU below the current CTU row is omitted in the temporal search order. Video encoding or decoding is then applied to the input data using the derived DV, wherein the derived DV is used for a coding tool selected from a first group as shown in step 1140. The derived DV can be used to indicate a prediction block in a reference view for inter-view motion prediction of the current block in AMVP (advance motion vector prediction) mode, Skip mode or Merge mode. The derived DV can be used to indicate a corresponding block in a reference view for inter-view residual prediction of the current block. The derived DV can also be used to predict a DV of a DCP (disparity-compensated prediction) block for the current block in the AMVP mode, the Skip mode or the Merge mode.

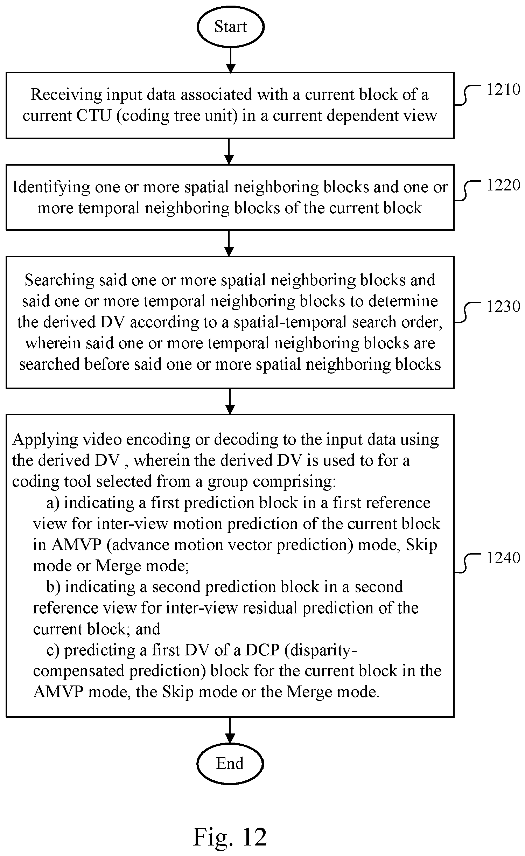

Fig. 12 illustrates another exemplary flowchart of a three-dimensional/multi-view coding system incorporating a unified spatial-temporal search order according to an embodiment of the present invention. The system receives input data associated with a current block of a current CTU (coding tree unit) in a current dependent view as shown in step 1210. The spatial neighboring blocks and temporal neighboring blocks of the current block are identified as shown in step 1220. The spatial neighboring blocks and the temporal neighboring blocks are searched to determine the derived DV according to a spatial-temporal search order as shown in step 1230, wherein the temporal neighboring blocks are searched before the spatial neighboring blocks. Video encoding or decoding is then applied to the input data using the derived DV, wherein the derived DV is used for a coding tool selected from a group as shown in step 1240. The derived DV can be used to indicate a prediction block in a reference view for inter-view motion prediction of the current block in AMVP (advance motion vector prediction) mode, Skip mode or Merge mode. The derived DV can be used to indicate a corresponding block in a reference view for inter-view residual prediction of the current block. The derived DV can also be used to predict a DV of a DCP (disparity-compensated prediction) block for the current block in the AMVP mode, the Skip mode or the Merge mode.

The flowcharts shown above are intended to illustrate examples of simplified/unified search orders. A person skilled in the art may modify each step, re-arranges the steps, split a step, or combine steps to practice the present invention without departing from the spirit of the present invention.

The above description is presented to enable a person of ordinary skill in the art to practice the present invention as provided in the context of a particular application and its requirement. Various modifications to the described embodiments will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed. In the above detailed description, various specific details are illustrated in order to provide a thorough understanding of the present invention. Nevertheless, it will be understood by those skilled in the art that the present invention may be practiced.

Embodiment of the present invention as described above may be implemented in various hardware, software codes, or a combination of both. For example, an embodiment of the present invention can be a circuit integrated into a video compression chip or program code integrated into video compression software to perform the processing described herein. An embodiment of the present invention may also be program code to be executed on a Digital Signal Processor (DSP) to perform the processing described herein. The invention may also involve a number of functions to be performed by a computer processor, a digital signal processor, a microprocessor, or field programmable gate array (FPGA). These processors can be configured to perform particular tasks according to the invention, by executing machine-readable software code or firmware code that defines the particular methods embodied by the invention. The software code or firmware code may be developed in different programming languages and different formats or styles. The software code may also be compiled for different target platforms. However, different code formats, styles and languages of software codes and other means of configuring code to perform the tasks in accordance with the invention will not depart from the scope of the invention.

The invention may be embodied in other specific forms without departing from its essential characteristics. The described examples are to be considered in all respects only as illustrative and not restrictive. The scope of the invention is therefore, indicated by the appended claims rather than by the foregoing description. All changes which come within the meaning and range of equivalency of the claims are to be embraced within their scope.

## Claims

1. A method of coding a block using a derived disparity vector, DV, for a three-dimensional or multi-view video coding system, the method comprising:
receiving (1110) input data associated with a current block of a current coding tree unit, CTU, in a current dependent view; and
identifying (1120) at least one spatial neighboring block (A₁, B₁, B₀, A₀, B₂) and at least one temporal neighboring block (CT, BR, TL) of the current block;
searching (1130) said at least one spatial neighboring block (A₁, B₁, B₀, A₀, B₂) and said at least one temporal neighboring block (CT, BR, TL) for their disparity vectors, DVs, to determine the derived DV according to a spatial-temporal search order, wherein the spatial-temporal search order comprises a temporal search order, wherein said at least one temporal neighboring block (CT, BR, TL) is searched according to said temporal search order; and
applying (1140) video encoding or decoding to the input data using the derived DV, wherein the derived DV is used for a coding tool for:
a) indicating one prediction block in one reference view for inter-view motion prediction of the current block in advanced motion vector prediction, AMVP, mode, Skip mode or Merge mode;
b) indicating one corresponding block in one reference view for inter-view residual prediction of the current block; or for
c) predicting one DV of a disparity-compensated prediction, DCP, block for the current block in the AMVP mode, the Skip mode or the Merge mode;
wherein the coding tool is selected from a group comprising inter-view motion prediction, inter-view residual prediction and DCP;
**characterized in that**
the temporal search order is the same for all dependent views, and said at least one temporal neighboring block (CT, BR, TL) includes a temporal BR block (BR), wherein the temporal BR block (BR) is omitted from the temporal search order if the temporal BR block is in a CTU below a current CTU row, and wherein the temporal BR block (BR) corresponds to a collocated bottom-right block (BR) across from a bottom-right corner of the current block, wherein any further temporal neighboring block, which is different from the temporal BR block and is in a CTU below the current CTU row, is also omitted from the temporal search order;
wherein the spatial-temporal search order is selected from a second group comprising:
a1) checking first DVs of said at least one spatial neighboring block (A₁, B₁, B₀, A₀, B₂), followed by checking second DVs of said at least one temporal neighboring block (CT, BR, TL), and followed by checking third DVs used by said at least one spatial neighboring block (A₁, B₁, B₀, A₀, B₂) for inter-view motion prediction;
b1) checking the second DVs of said at least one temporal neighboring block (CT, BR, TL), followed by checking the first DVs of said at least one spatial neighboring block (A₁, B₁, B₀, A₀, B₂), and followed by checking the third DVs used by said at least one spatial neighboring block (A₁, B₁, B₀, A₀, B₂) for the inter-view motion prediction; and
c1) checking fourth DVs of at least one first temporal neighboring block of a first temporal picture, followed by checking the first DVs of said at least one spatial neighboring block (A₁, B₁, B₀, A₀, B₂), followed by checking fifth DVs of at least one second temporal neighboring block of one second temporal picture, and followed by checking the third DVs used by said at least one spatial neighboring block (A₁, B₁, B₀, A₀, B₂) for the inter-view motion prediction.

2. The method of Claim 1, wherein said at least one temporal neighboring block (CT, BR) corresponds to a temporal CT block (CT) and the temporal BR block (BR), wherein the temporal CT block (CT) corresponds to a collocated center block (CT) associated with the current block and the temporal BR block (BR) corresponds to the collocated bottom-right block (BR) across from the bottom-right corner of the current block, wherein the center block (CT) is located at an upper-left, upper-right, below-left, or below-right location of a center point of the current block.

3. The method of Claim 1, wherein the temporal search order checks the temporal BR block (BR) first and the temporal CT block (CT) next.

4. The method of Claim 1, wherein said at least one spatial neighboring block (A₁, B₁, B₀, A₀, B₂) corresponds to at least one of a left block (A₁), an above block (B₁), an above-right block (B₀), a bottom-left block (A₀) and an above-left block (B₂) of the current block.

5. The method of Claim 1, wherein the temporal BR block (BR) is included in the temporal search order if the temporal BR block (BR) is in a same CTU row as the current CTU.

6. The method of Claim 1, wherein said at least one temporal neighboring block (CT, BR) excludes a temporal TL block (TL), wherein the temporal TL block (TL) corresponds to a collocated top-left block (TL) of the current block.

7. The method of Claim 1, wherein said at least one temporal neighboring block (CT, BR, TL) for determining the derived DV is also used for determining a motion vector prediction, MVP, candidate used for the AMVP mode or the Merge mode.

8. The method of Claim 1, wherein said at least one temporal neighboring block (CT, BR, TL), the temporal searching order, and any constraint on said at least one temporal neighboring block (CT, BR, TL) used to determine the derived DV are also used to derive a motion vector prediction, MVP, candidate used for the AMVP mode or the Merge mode.

9. The method of Claim 1, wherein said at least one temporal neighboring block (CT, BR, TL) is searched before said at least one spatial neighboring block (A₁, B₁, B₀, A₀, B₂).

10. The method of Claim 9, wherein the temporal BR block (BR) is included in the temporal search order if the temporal BR block (BR) is in a same CTU row as the current CTU.

11. The method of Claim 9, wherein the spatial-temporal search order checks the first DVs of said at least one spatial neighboring block (A₁, B₁, B₀, A₀, B₂) and then checks the third DVs used by said at least one spatial neighboring block (A₁, B₁, B₀, A₀, B₂) for inter-view motion prediction.

12. The method of Claim 9, wherein said at least one temporal neighboring block (CT, BR) excludes a temporal TL block (TL), wherein the temporal TL block (TL) corresponds to a collocated top-left block (TL) of the current block.

13. The method of Claim 9, wherein said at least one temporal neighboring block (CT, BR) corresponds to a collocated center block (CT) associated with the current block and the collocated bottom-right block (BR) across from the bottom-right corner of the current block, and wherein said at least one spatial neighboring block (A₁, B₁, B₀, A₀, B₂) corresponds to at least one of a left block (A₁), an above block (B₁), an above-right block (B₀), a bottom-left block (A₀) and an above-left block (B₂) of the current block, and wherein the center block (CT) is located at an upper-left, upper-right, below-left, or below-right location of a center point of the current block.

## Patentansprüche

1. Verfahren zum Codieren eines Blocks unter Verwendung eines abgeleiteten Disparitätsvektors, DV, für ein dreidimensionales oder Multiview-Video-Codierungssystem, wobei das Verfahren umfasst:
Empfangen (1110) von Eingabedaten, die mit einem aktuellen Block einer aktuellen Codierungsbaum-Einheit, CTU, in einer aktuellen abhängigen Aufnahme verknüpft sind; und
Identifizieren (1120) zumindest eines räumlichen Nachbarblocks (A₁, B₁, B₀, A₀, B₂) und zumindest eines zeitlichen Nachbarblocks (CT, BR, TL) des aktuellen Blocks;
Absuchen (1130) des zumindest einen räumlichen Nachbarblocks (A₁, B₁, B₀, A₀, B₂) und des zumindest einen zeitlichen Nachbarblocks (CT, BR, TL) nach ihren Disparitätsvektoren, DVs, um den abgeleiteten DV gemäß einer räumlich-zeitlichen Suchreihenfolge zu bestimmen, wobei die räumlich-zeitliche Suchreihenfolge eine zeitliche Suchreihenfolge umfasst, wobei der zumindest eine zeitliche Nachbarblock (CT, BR, TL) gemäß der zeitlichen Suchreihenfolge abgesucht wird; und
Anwenden (1140) einer Video-Codierung oder -Decodierung auf die Eingabedaten unter Verwendung des abgeleiteten DV, wobei der abgeleitete DV für ein Codierungswerkzeug verwendet wird zum:
a) Angeben eines Vorhersageblocks in einer Referenzaufnahme für eine Vorhersage von Bewegungen zwischen Aufnahmen des aktuellen Blocks in einem fortgeschrittenen Modus zur Vorhersage von Bewegungsvektoren, AMVP, einem Skip- bzw. Übersprung-Modus oder einem Merge- bzw. Vereinigungs-Modus;
b) Angeben eines entsprechenden Blocks in einer Referenzaufnahme für eine Vorhersage von Residuen zwischen Aufnahmen des aktuellen Blocks; oder zum
c) Vorhersagen eines DVs eines Blocks zur disparitätskompensierten Vorhersage, DCP, für den aktuellen Block in dem AVMP-Modus, dem Übersprung-Modus oder dem Vereinigungs-Modus;
wobei das Codierungswerkzeug aus einer Gruppe ausgewählt wird, die eine Vorhersage von Bewegungen zwischen Aufnahmen, eine Vorhersage von Residuen zwischen Aufnahmen und eine DCP umfasst;
**dadurch gekennzeichnet, dass**
die zeitliche Suchreihenfolge die gleiche für alle abhängigen Aufnahmen ist und der zumindest eine zeitliche Nachbarblock (CT, BR, TL) einen zeitlichen BR-Block (BR) enthält, wobei der zeitliche BR-Block (BR) aus der zeitlichen Suchreihenfolge weggelassen wird, falls der zeitliche BR-Block in einer CTU unter einer aktuellen CTU-Reihe ist, und wobei der zeitliche BR-Block (BR) einem räumlich gleich und zeitlich unterschiedlich angeordneten unteren rechten Block (BR) quer zu einer unteren rechten Ecke des aktuellen Blocks entspricht, wobei irgendein weiterer zeitlicher Nachbarblock, der von dem zeitlichen BR-Block verschieden ist und in einer CTU unterhalb der aktuellen CTU-Reihe ist, ebenfalls aus der zeitlichen Suchreihenfolge weggelassen wird;
wobei die räumlich-zeitliche Suchreihenfolge aus einer zweiten Gruppe ausgewählt wird, welche umfasst:
a1) Überprüfen erster DVs des zumindest einen räumlichen Nachbarblocks (A₁, B₁, B₀, A₀, B₂), gefolgt von einem Überprüfen zweiter DVs des zumindest einen zeitlichen Nachbarblocks (CT, BR, TL) und gefolgt von einem Überprüfen dritter DVs, die von dem zumindest einen räumlichen Nachbarblock (A₁, B₁, B₀, A₀, B₂) für eine Vorhersage von Bewegungen zwischen Aufnahmen verwendet werden;
b1) Überprüfen der zweiten DVs des zumindest einen zeitlichen Nachbarblocks (CT, BR, TL), gefolgt von einem Überprüfen der ersten DVs des zumindest einen räumlichen Nachbarblocks (A₁, B₁, B₀, A₀, B₂) und gefolgt von einem Überprüfen der dritten DVs, die von dem zumindest einen räumlichen Nachbarblock (A₁, B₁, B₀, A₀, B₂) für die Vorhersage von Bewegungen zwischen Aufnahmen verwendet werden; und
c1) Überprüfen vierter DVs von zumindest einem ersten zeitlichen Nachbarblock eines ersten zeitlichen Bildes, gefolgt von einem Überprüfen der ersten DVs des zumindest einen räumlichen Nachbarblocks (A₁, B₁, B₀, A₀, B₂), gefolgt von einem Überprüfen fünfter DVs von zumindest einem zweiten zeitlichen Nachbarblock eines zweiten zeitlichen Bildes und gefolgt von einem Überprüfen der dritten DVs, die von dem zumindest einen räumlichen Nachbarblock (A₁, B₁, B₀, A₀, B₂) für die Vorhersage von Bewegungen zwischen Aufnahmen verwendet werden.

2. Verfahren nach Anspruch 1, wobei der zumindest eine zeitliche Nachbarblock (CT, BR) einem zeitlichen CT-Block (CT) und dem zeitlichen BR-Block (BR) entspricht, wobei der zeitliche CT-Block (CT) einem räumlich gleich und zeitlich unterschiedlich angeordneten zentralen Block (CT) entspricht, der mit dem aktuellen Block verknüpft ist, und der zeitliche BR-Block (BR) dem räumlich gleich und zeitlich unterschiedlich angeordneten unteren rechten Block (BR) quer zu der Ecke unten rechts des aktuellen Blocks entspricht, wobei der zentrale Block (CT) an einer oberen linken, oberen rechten, unteren linken oder unteren rechten Stelle eines Mittelpunkts des aktuellen Blocks gelegen ist.

3. Verfahren nach Anspruch 1, wobei die zeitliche Suchreihenfolge zuerst den zeitlichen BR-Block (BR) und als nächstes den zeitlichen CT-Block (CT) überprüft.

4. Verfahren nach Anspruch 1, wobei der zumindest eine räumliche Nachbarblock (A₁, B₁, B₀, A₀, B₂) zumindest einem eines Blocks links (A₁), eines Blocks oberhalb (B₁), eines Blocks oberhalb rechts (B₀), eines Blocks unten links (A₀) und eines Blocks oberhalb links (B₂) von dem aktuellen Block entspricht.

5. Verfahren nach Anspruch 1, wobei der zeitliche BR-Block (BR) in der zeitlichen Suchreihenfolge enthalten ist, falls der zeitliche BR-Block (BR) in einer gleichen CTU-Reihe wie die aktuelle CTU ist.

6. Verfahren nach Anspruch 1, wobei der zumindest eine zeitliche Nachbarblock (CT, BR) einen zeitlichen TL-Block (TL) ausschließt, wobei der zeitliche TL-Block (TL) einem räumlich gleich und zeitlich unterschiedlich angeordneten oberen linken Block (TL) des aktuellen Blocks entspricht.

7. Verfahren nach Anspruch 1, wobei der zumindest eine zeitliche Nachbarblock (CT, BR, TL) zum Bestimmen des abgeleiteten DV auch zum Bestimmen eines Kandidaten für eine Bewegungsvektor-Vorhersage, MVP, verwendet wird, der für den AMVP-Modus oder den Vereinigungs-Modus verwendet wird.

8. Verfahren nach Anspruch 1, wobei der zumindest eine zeitliche Nachbarblock (CT, BR, TL), die zeitliche Suchreihenfolge und irgendeine Beschränkung auf dem zumindest einen zeitlichen Nachbarblock (CT, BR, TL), der verwendet wird, um den abgeleiteten DV zu bestimmen, auch verwendet werden, um einen Kandidaten für eine Bewegungsvektor-Vorhersage, MVP, abzuleiten, der für den AMVP-Modus oder den Vereinigungs-Modus verwendet wird.

9. Verfahren nach Anspruch 1, wobei der zumindest eine zeitliche Nachbarblock (CT, BR, TL) vor dem zumindest einen räumlichen Nachbarblock (A₁, B₁, B₀, A₀, B₂) abgesucht wird.

10. Verfahren nach Anspruch 9, wobei der zeitliche BR-Block (BR) in der zeitlichen Suchreihenfolge enthalten ist, falls der zeitliche BR-Block (BR) in einer gleichen CTU-Reihe wie die aktuelle CTU ist.

11. Verfahren nach Anspruch 9, wobei die räumlich-zeitliche Suchreihenfolge die ersten DVs des zumindest einen räumlichen Nachbarblocks (A₁, B₁, B₀, A₀, B₂) überprüft und dann die dritten DVs überprüft, die von dem zumindest einen räumlichen Nachbarblock (A₁, B₁, B₀, A₀, B₂) für eine Vorhersage von Bewegungen zwischen Aufnahmen verwendet werden.

12. Verfahren nach Anspruch 9, wobei der zumindest eine zeitliche Nachbarblock (CT, BR) einen zeitlichen TL-Block (TL) ausschließt, wobei der zeitliche TL-Block (TL) einem räumlich gleich und zeitlich unterschiedlich angeordneten oberen linken Block (TL) des aktuellen Blocks entspricht.

13. Verfahren nach Anspruch 9, wobei der zumindest eine zeitliche Nachbarblock (CT, BR) einem räumlich gleich und zeitlich unterschiedlich angeordneten zentralen Block (CT) entspricht, der mit dem aktuellen Block und dem räumlich gleich und zeitlich unterschiedlich angeordneten unteren rechten Block (BR) quer zu der unteren rechten Ecke des aktuellen Blocks verknüpft ist, und wobei der zumindest eine räumliche Nachbarblock (A₁, B₁, B₀, A₀, B₂) zumindest einem eines Blocks links (A₁), eines Blocks oberhalb (B₁), eines Blocks oberhalb rechts (B₀), eines Blocks unten links (A₀) und eines Blocks oberhalb links (B₂) von dem aktuellen Block entspricht, und wobei der zentrale Block (CT) an einer oberen linken, oberen rechten, unteren linken oder unteren rechten Stelle eines Mittelpunkts des aktuellen Blocks gelegen ist.

## Revendications

1. Procédé de codage d'un bloc utilisant un vecteur de disparité dérivé, DV, pour un système de codage vidéo tridimensionnel ou multivue, le procédé comprenant le fait :
de recevoir (1110) des données d'entrée associées à un bloc actuel d'une unité d'arbre de codage actuelle, CTU, dans une vue dépendante actuelle ; et
d'identifier (1120) au moins un bloc voisin spatial (A₁, B₁, B₀, A₀, B₂) et au moins un bloc voisin temporel (CT, BR, TL) du bloc actuel ;
de rechercher (1130) ledit au moins un bloc voisin spatial (A₁, B₁, B₀, A₀, B₂) et ledit au moins un bloc voisin temporel (CT, BR, TL) pour leurs vecteurs de disparité, DVs, pour déterminer le DV dérivé en fonction d'un ordre de recherche spatio-temporel, dans lequel l'ordre de recherche spatio-temporel comprend un ordre de recherche temporel, dans lequel ledit au moins un bloc voisin temporel (CT, BR, TL) est recherché en fonction dudit ordre de recherche temporel ; et
d'appliquer (1140) un codage ou décodage vidéo aux données d'entrée utilisant le DV dérivé, dans lequel le DV dérivé est utilisé pour un outil de codage pour :
a) indiquer un bloc de prédiction dans une vue de référence pour une prédiction de mouvement inter-vue du bloc actuel dans un mode de prédiction de vecteur de mouvement avancée, AMVP, un mode Saut ou un Mode Fusion ;
b) indiquer un bloc correspondant dans une vue de référence pour une prédiction résiduelle inter-vue du bloc actuel ; ou pour
c) prédire un DV d'un bloc de prédiction à compensation de disparité, DCP, pour le bloc actuel dans le mode AMVP, le mode Saut ou le mode Fusion ;
dans lequel l'outil de codage est choisi à partir d'un groupe comprenant une prédiction de mouvement inter-vue, une prédiction résiduelle inter-vue et une DCP ;
**caractérisé en ce que**
l'ordre de recherche temporel est le même pour toutes les vues dépendantes, et ledit au moins un bloc voisin temporel (CT, BR, TL) comporte un bloc BR temporel (BR), dans lequel le bloc BR temporel (BR) est omis de l'ordre de recherche temporel si le bloc BR temporel est dans une CTU en dessous d'une rangée CTU actuelle, et dans lequel le bloc BR temporel (BR) correspond à un bloc inférieur-droit colocalisé (BR) en face d'un coin inférieur-droit du bloc actuel, dans lequel tout autre bloc voisin temporel, qui est différent du bloc BR temporel et qui est dans une CTU en dessous de la rangée CTU actuelle, est également omis de l'ordre de recherche temporel ;
dans lequel l'ordre de recherche spatio-temporel est choisi à partir d'un deuxième groupe comprenant le fait :
a1) de vérifier des premiers DVs dudit au moins un bloc voisin spatial (A₁, B₁, B₀, A₀, B₂), puis par le fait de vérifier des deuxièmes DVs dudit au moins un bloc voisin temporel (CT, BR, TL), puis par le fait de vérifier des troisièmes DVs utilisés par ledit au moins un bloc voisin spatial (A₁, B₁, B₀, A₀, B₂) pour une prédiction de mouvement inter-vue ;
b1) de vérifier les deuxièmes DVs dudit au moins un bloc voisin temporel (CT, BR, TL), puis par le fait de vérifier les premiers DVs dudit au moins un bloc voisin spatial (A₁, B₁, B₀, A₀, B₂), puis par le fait de vérifier les troisièmes DVs utilisés par ledit au moins un bloc voisin spatial (A₁, B₁, B₀, A₀, B₂) pour la prédiction de mouvement inter-vue ; et
c1) de vérifier des quatrièmes DVs d'au moins un premier bloc voisin temporel d'une première image temporelle, puis par le fait de vérifier les premiers DVs dudit au moins un bloc voisin spatial (A₁, B₁, B₀, A₀, B₂), puis par le fait de vérifier des cinquièmes DVs d'au moins un deuxième bloc voisin temporel d'une deuxième image temporelle, puis par le fait de vérifier les troisièmes DV utilisés par ledit au moins un bloc voisin spatial (A₁, B₁, B₀, A₀, B₂) pour la prédiction de mouvement inter-vue.

2. Procédé de la revendication 1, dans lequel ledit au moins un bloc voisin temporel (CT, BR) correspond à un bloc CT temporel (CT) et au bloc BR temporel (BR), dans lequel le bloc CT temporel (CT) correspond à un bloc central colocalisé (CT) associé au bloc actuel et le bloc BR temporel (BR) correspond au bloc inférieur droit colocalisé (BR) en face du coin inférieur-droit du bloc actuel, dans lequel le bloc central (CT) est situé à un emplacement supérieur-gauche, supérieur-droit, dessous-gauche, ou dessous-droit d'un point central du bloc actuel.

3. Procédé de la revendication 1, dans lequel l'ordre de recherche temporel vérifie d'abord le bloc BR temporel (BR) et ensuite le bloc CT temporel (CT).

4. Procédé de la revendication 1, dans lequel ledit au moins un bloc voisin spatial (A₁, B₁, B₀, A₀, B₂) correspond à au moins l'un parmi un bloc gauche (A₁), un bloc de dessus (B₁), un bloc de dessus-droit (B₀), un bloc inférieur-gauche (A₀) et un bloc de dessus-gauche (B₂) du bloc actuel.

5. Procédé de la revendication 1, dans lequel le bloc BR temporel (BR) est inclus dans l'ordre de recherche temporel si le bloc BR temporel (BR) se trouve dans une même rangée CTU que la CTU actuelle.

6. Procédé de la revendication 1, dans lequel ledit au moins un bloc voisin temporel (CT, BR) exclut un bloc TL temporel (TL), dans lequel le bloc TL temporel (TL) correspond à un bloc haut-gauche colocalisé (TL) du bloc actuel.

7. Procédé de la revendication 1, dans lequel ledit au moins un bloc voisin temporel (CT, BR, TL) pour déterminer le DV dérivé est également utilisé pour déterminer un candidat de prédiction de vecteur de mouvement, MVP, utilisé pour le mode AMVP ou le mode Fusion.

8. Procédé de la revendication 1, dans lequel ledit au moins un bloc voisin temporel (CT, BR, TL), l'ordre de recherche temporel, et toute contrainte sur ledit au moins un bloc voisin temporel (CT, BR, TL) utilisés pour déterminer le DV dérivé sont également utilisés pour dériver un candidat de prédiction de vecteur de mouvement, MVP, utilisé pour le mode AMVP ou le mode Fusion.

9. Procédé de la revendication 1, dans lequel ledit au moins un bloc voisin temporel (CT, BR, TL) est recherché avant ledit au moins un bloc voisin spatial (A₁, B₁, B₀, A₀, B₂).

10. Procédé de la revendication 9, dans lequel le bloc BR temporel (BR) est inclus dans l'ordre de recherche temporel si le bloc BR temporel (BR) est dans une même rangée CTU que la CTU actuelle.

11. Procédé de la revendication 9, dans lequel l'ordre de recherche spatio-temporel vérifie les premiers DVs dudit au moins un bloc voisin spatial (A₁, B₁, B₀, A₀, B₂) et vérifie ensuite les troisièmes DVs utilisés par ledit au moins un bloc voisin spatial (A₁, B₁, B₀, A₀, B₂) pour une prédiction de mouvement inter-vue.

12. Procédé de la revendication 9, dans lequel ledit au moins un bloc voisin temporel (CT, BR) exclut un bloc TL temporel (TL), dans lequel le bloc TL temporel (TL) correspond à un bloc haut-gauche colocalisé (TL) du bloc actuel.

13. Procédé de la revendication 9, dans lequel ledit au moins un bloc voisin temporel (CT, BR) correspond à un bloc central colocalisé (CT) associé au bloc actuel et au bloc inférieur-droit colocalisé (BR) en face du coin inférieur-droit du bloc actuel, et dans lequel ledit au moins un bloc voisin spatial (A₁, B₁, B₀, A₀, B₂) correspond à au moins l'un parmi un bloc gauche (A₁), un bloc de dessus (B₁), un bloc de dessus-droit (B₀), un bloc inférieur-gauche (A₀) et un bloc de dessus-gauche (B₂) du bloc actuel, et dans lequel le bloc central (CT) est à un emplacement supérieur-gauche, supérieur-droit, de dessous-gauche ou de dessous-droit d'un point central du bloc actuel.
